# FASCICULE DE BREVET EUROPEEN

(11) **EP 0 570 285 B1**
(45) Date de publication et mention de la délivrance du brevet: **26.07.1995**
(21) Numéro de dépôt: 93401218.8
(22) Date de dépôt: 13.05.1993
(51) Int. Cl.: H01R 9/26, H02B 1/052

(54) **Boîte à encliqueter sur un rail de support, notamment pour appareillage électrique**
Gehäuse zum Festklemmen auf einer Schiene, insbesondere für elektrische Vorrichtung
Case to be clamped to a support rail, in particular for electrical apparatus

(30) Priorité: 14.05.1992 FR 9205852
(43) Date de publication de la demande: 18.11.1993
(73) Titulaire: PLANET-WATTOHM, 60300 Senlis (FR)
(72) Inventeur: Laigle, Jean, F-93700 Drancy (FR); Coutant, Régis, F-60117 Vauciennes (FR)
(74) Mandataire: CABINET BONNET-THIRION

(56) Documents cités:
- EP-A- 0 300 065
- EP-A- 0 462 329
- FR-A- 2 087 657
- FR-A- 2 300 485

## Description

La présente invention concerne d'une manière générale les boîtes qui, pour leur encliquetage sur un quelconque rail de support, comportent, en saillie sur la surface inférieure de leur fond, au moins une patte de fixation élastiquement déformable.

C'est le cas, par exemple, de certaines des boîtes mises en oeuvre pour le logement d'appareillages électriques, et, plus précisément, pour le logement du mécanisme de tels appareillages électriques, lorsque cette boîte doit être elle-même logée dans une quelconque goulotte ou un quelconque conduit.

Le rail de support correspondant fait alors saillie sur le fond de cette goulotte ou de ce conduit, en étant par exemple venu d'un seul tenant de ce fond.

Il est alors formé de deux nervures, qui, disposées à distance l'une de l'autre, parallèlement l'une à l'autre, ont en section transversale un profil en T ou en L renversé, et la boîte à fixer comporte, en correspondance, à distance l'une de l'autre, deux pattes de fixation propres à venir se crocheter sur ces nervures.

Il s'avère à la pratique qu'une telle patte de fixation peut venir à échapper intempestivement à la nervure avec laquelle elle est en prise, au détriment de la tenue d'ensemble de la boîte sur son rail de support.

La présente invention a d'une manière générale pour objet une disposition permettant d'éviter de manière particulièrement fiable et sûre cet inconvénient.

De manière plus précise, elle a pour objet une boîte à encliqueter sur un rail de support, notamment pour appareillage électrique, du genre comportant, en saillie sur la surface inférieure de son fond, pour encliquetage sur le rail de support, au moins une patte de fixation élastiquement déformable, cette boîte étant d'une manière générale caractérisée en ce qu'il est associé à cette patte de fixation un plot de blocage monté mobile entre deux positions, à savoir une position escamotée d'attente, pour laquelle il laisse un libre jeu à cette patte de fixation, et une position déployée de service, pour laquelle, au contraire, il la contrebute à son dos.

Pour la mise en place de la boîte sur le rail de support, ce plot de blocage est en position escamotée, et il laisse donc à la patte de fixation correspondante de cette boîte toute la capacité de déformation élastique qui lui est nécessaire pour s'encliqueter sur une nervure de ce rail de support.

Mais, une fois la boîte mise en place, il suffit de disposer en position déployée ce plot de blocage, pour que, contrebutant à son dos la patte de fixation, il verrouille celle-ci sur le rail de support, en lui interdisant de jouer suffisamment par rapport à la nervure de celui-ci avec laquelle elle est en prise pour qu'elle puisse échapper à cette nervure.

Préférentiellement, le plot de blocage ainsi prévu par l'invention est d'un seul tenant avec la boîte, et il s'étend à l'intérieur de celle-ci en position escamotée.

Il est ainsi avantageusement et sûrement en permanence à la disposition de l'utilisateur.

Les caractéristiques et avantages de l'invention ressortiront d'ailleurs de la description qui va suivre, à titre d'exemple, en référence aux dessins schématiques annexés sur lesquels :
la figure 1 est une vue en perspective d'une boîte suivant l'invention, dont les plots de blocage sont en position escamotée ;
la figure 2 en est une vue en plan, suivant la flèche II de la figure 1 ;
la figure 3 en est une vue en coupe transversale, suivant la ligne III-III de la figure 2 ;
les figures 4 et 5 en sont d'autres vues en coupe transversale, suivant chacune respectivement les lignes IV-IV et V-V de la figure 3 ;
la figure 6 est une vue partielle en coupe transversale analogue à celle de la figure 3, pour la position déployée d'un des plots de blocage.

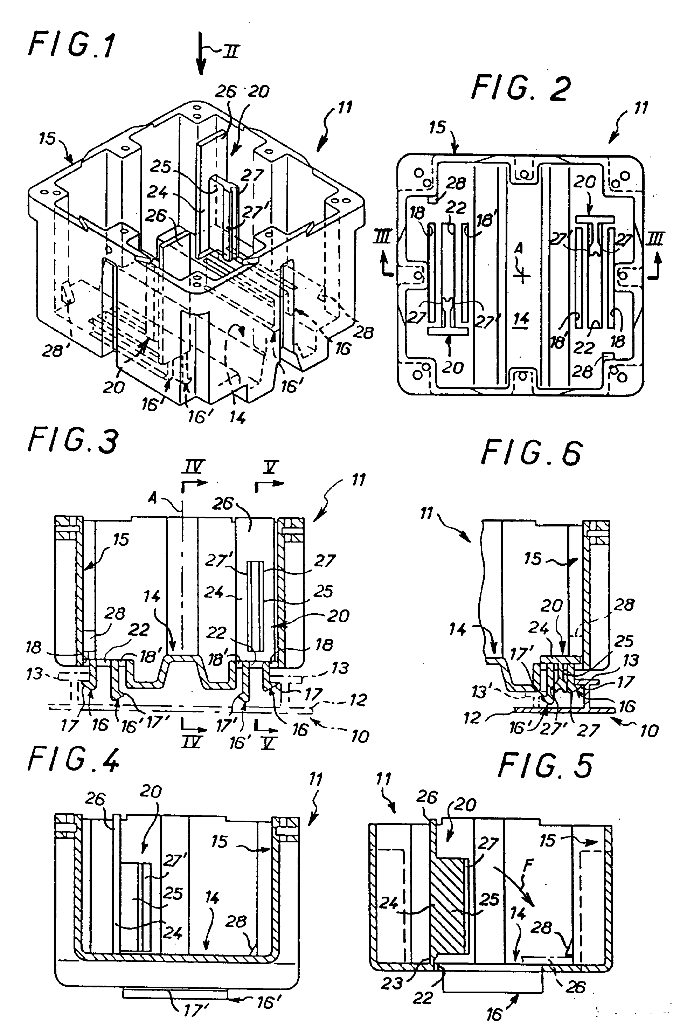

Tel qu'illustré sur ces figures, et plus particulièrement sur les figures 3 et 6, il s'agit, globalement, de rapporter par encliquetage sur un quelconque rail de support 10 une quelconque boîte 11.

Le rail de support 10 vient par exemple d'un seul tenant du fond 12 d'une quelconque goulotte ou d'un quelconque conduit, dont seul ce fond 12 a été représenté, partiellement, en traits interrompus sur la figure 3 et en traits continus sur la figure 6.

En variante, il peut aussi bien être rapporté sur ce fond 12, par exemple par soudage ou rivetage.

Quoi qu'il en soit, il comporte par exemple deux nervures 13, ou 13′, qui, disposées à distance l'une de l'autre, parallèlement l'une à l'autre, ont en section transversale un profil en T, comme représenté, ou un profil en L renversé.

Les nervures 13 correspondent à un premier mode de fixation et les nervures 13′ à un deuxième dissocié du précédent.

Les dispositions correspondantes étant bien connues par elles-mêmes et ne relevant pas de la présente invention, elles ne seront pas décrites plus en détail ici.

La boîte 11 ne relève pas non plus par elle-même de la présente invention.

Seuls en seront donc décrits ici les éléments nécessaires à la compréhension de l'invention.

Globalement, cette boîte 11 comporte un fond 14 et une paroi latérale 15.

Dans la forme de réalisation représentée, elle a, en plan, un contour globalement carré.

Mais il va de soi que ce contour peut être quelconque.

Pour son encliquetage sur le rail de support 10, la boîte 11 comporte, en saillie sur la face inférieure de son fond 14, au moins une patte de fixation 16 élastiquement déformable.

Pour coopérer en crochetage avec le rail de support 10, et, plus précisément, avec la nervure 13 correspondante de celui-ci, cette patte de fixation 16 comporte, à son extrémité, le long de son bord libre, une saillie 17.

En pratique, cette saillie 17 est biseautée par un chanfrein, pour faciliter son engagement sur une nervure 13.

En pratique, également, la boîte 11 étant réalisée par moulage, le fond 14 est ajouré d'un évidement 18 propre au passage du poinçon nécessaire à la formation de la saillie 17.

En plan, cet évidement 18 a un contour rectangulaire dans la forme de réalisation représentée, à l'image de celui de la saillie 17.

Mais il va de soi qu'il peut aussi bien avoir un contour différent.

En pratique, enfin, il est prévu, en saillie, à distance l'une de l'autre, et parallèlement l'une à l'autre, sur la surface inférieure du fond 14, deux pattes de fixation 16, à raison d'une par nervure 13, les saillies 17 de ces pattes de fixation 16 s'étendent en directions opposées l'une par rapport à l'autre.

Dans la forme de réalisation représentée, chacune de ces pattes de fixation 16 est jumelée avec une autre patte de fixation 16′, qui, de même type, mais de hauteur différente, s'étend parallèlement à elle, pour encliquetage sur une nervure 13′ elle-même de hauteur différente, et dont la saillie 17′, à laquelle correspond un évidement 18′ dans le fond 14, s'étend en direction opposée à celle de sa propre saillie 17.

Suivant l'invention, il est associé, à l'une au moins des pattes de fixation 16, et, en pratique, à chacune de celles-ci, un plot de blocage 20 monté mobile entre deux positions, à savoir une position escamotée d'attente, figures 1 à 5, pour laquelle il laisse à une telle patte de fixation 16, un libre jeu, et une position déployée de service, figure 6, pour laquelle, au contraire, il la contrebute à son dos, en intervenant, donc, du côté de cette patte de fixation 16 opposé à sa saillie 17.

A chacune des pattes de fixation 16 il est donc associé un plot de blocage 20 distinct.

En outre, lorsque, comme en l'espèce, une telle patte de fixation 16 est jumelée avec une patte de fixation 16′, le plot de blocage 20 correspondant contrebute indifféremment l'une et/ou l'autre de ces pattes de fixation 16, 16′ lorsqu'il est en position déployée.

Dans la forme de réalisation représentée, le fond 14 présente une ouverture 22 en bordure de chacune des pattes de fixation 16, entre celle-ci et la patte de fixation 16′ associée, pour passage du plot de blocage 20 correspondant.

Cette ouverture 22, de contour globalement quadrangulaire, s'étend donc parallèlement aux évidements 18, 18′ correspondants, à mi-distance entre ceux-ci.

Dans la forme de réalisation représentée, les plots de blocage 20 sont d'un seul tenant avec la boîte 11, et viennent de moulage avec celle-ci.

Ils s'étendent donc à l'intérieur de la boîte 11 en position escamotée.

Plus précisément, dans cette forme de réalisation, les plots de blocage 20 sont chacun individuellement articulés au fond 14 par une zone charnière 23 de moindre épaisseur, en étant chacun respectivement disposés en positions diagonalement opposées l'un par rapport à l'autre vis-à-vis de l'axe A de l'ensemble, et, en position escamotée, ils s'étendent sensiblement perpendiculairement au fond 14.

En section transversale, les plots de blocage 20 ont un profil en T, avec une platine 24, pour appui sur le fond 14, sur la surface supérieure de celui-ci, et un jambage 25, pour contrebutée des pattes de fixation 16, 16′ associées.

Dans la forme de réalisation représentée, la platine 24 se prolonge par une languette de préhension 26 au-delà du jambage 25, en formant avec cette languette de préhension 26 une plaquette de contour globalement rectangulaire.

Sa largeur est suffisante pour que, en position escamotée, elle s'étende de l'un à l'autre des évidements 18, 18′, en recouvrant ceux-ci.

En pratique, la zone charnière 23 s'étend à l'une des extrémités transversales de la platine 24, perpendiculairement au jambage 25, et, donc, perpendiculairement à la direction d'allongement des évidements 18, 18′ et de l'ouverture 22.

Dans la forme de réalisation représentée, le jambage 25 se présente lui-même sous la forme d'une plaquette globalement rectangulaire.

Dans la forme de réalisation représentée, chacun des plots de blocage 20 ainsi constitués comporte, en saillie, le long de son bord libre, et, donc, en pratique, le long du bord libre de son jambage 25, pour porter sur les pattes de fixation 16, 16′, une saillie 27, 27′.

Il en résulte que, en section transversale, la tranche libre de ce jambage 25 a, globalement, un profil en U ou en V.

Enfin, dans la forme de réalisation représentée, il est associé, à chacun des plots de blocage 20, pour son verrouillage débrayable en position déployée, des moyens d'encliquetage.

En pratique, ces moyens d'encliquetage comportent au moins un cran 28, qui est prévu en saillie sur la surface interne de la boîte 11, à distance de son fond 14, et sous lequel s'engage un tel plot de blocage 20 lorsqu'il est en position déployée.

Ce cran 28, qui est biseauté par un chanfrein d'engagement, s'étend en pratique sur la surface interne de la paroi latérale 15 de la boîte 11, du côté de l'ouverture 22 opposé à la zone charnière 23, pour coopération avec la languette de préhension 26 prolongeant la platine 24.

Pour la mise en place, par encliquetage, de la boîte 11 sur un rail de support 10, les plots de blocage 20 sont laissés en position déployée, figures 1 à 5.

Comme indiqué, cette mise en place peut indifféremment se faire sur un rail de support 10 présentant des nervures 13 ou sur un rail de support 10 présentant des nervures 13′.

Dans l'un et l'autre cas, il suffit, ensuite, pour verrouiller en place la boîte 11, de faire passer ses plots de blocage 20 de leur position escamotée à leur position déployée représentée à la figure 6, par pivotement autour de leur zone charnière 23, suivant la flèche F de la figure 5.

En s'engageant chacun à travers une ouverture 22 du fond 14, ils viennent alors contrebuter à leur dos les pattes de fixation 16, 16′, par leur saillie 27, 27′, et ils s'opposent ainsi à tout jeu de ces pattes de fixation 16, 16′.

Ainsi qu'on l'aura compris, le fait que les plots de blocage 20 ne portent ainsi sur les pattes de fixation 16, 16′ que par leur saillie 27, 27′ permet avantageusement de faciliter leur passage de leur position escamotée à leur position déployée en limitant le frottement correspondant.

Il permet également de se satisfaire avantageusement des éventuelles tolérances de fabrication des nervures 13, 13′.

Lorsqu'ils sont en position déployée de service, les plots de blocage 20 sont encliquetés par leur languette de préhension 26 sous les crans 28 de la boîte 11, tel que schématisé en traits interrompus pour l'un d'eux sur la figure 5, et ils ne peuvent ainsi pas revenir de manière fortuite en position escamotée.

Il en est d'autant plus ainsi que les crans 28 qui assurent leur maintien ne travaillent pas dans le sens de l'effort auquel sont soumises les pattes de fixation 16 ou 16′ lorsque la boîte 11 est l'objet d'une sollicitation d'arrachement.

En effet, ces crans 28 travaillent perpendiculairement au fond 14, alors qu'une sollicitation d'arrachement sur la boîte 11 se traduit par un effort parallèle à ce fond 14.

Bien entendu, la présente invention ne se limite pas à la forme de réalisation décrite et représentée, mais englobe toute variante d'exécution.

En particulier, la boîte suivant l'invention n'est pas nécessairement une boîte polyvalente apte à se satisfaire indifféremment de deux modes de fixation différents et présentant à cet effet des pattes de fixation de hauteurs différentes.

Il peut au contraire s'agir aussi bien d'une boîte ne convenant qu'à l'un ou l'autre de ces modes de fixation.

Dans ce cas, elle ne comporte qu'un seul type de patte de fixation.

Mais, comme décrit, cette patte de fixation peut avantageusement être jumelée avec une autre patte, qui n'est plus elle aussi une patte de fixation dûment munie d'une saillie pour son crochetage sur une quelconque nervure, mais qui, en contrebutant le plot de blocage associé lorsque celui-ci est en position déployée, conforte avantageusement l'appui fourni par ce plot de blocage à la patte de fixation à laquelle elle est associée.

## Revendications

1. Boîte à encliqueter sur un rail de support, notamment pour appareillage électrique, du genre comportant, en saillie sur la surface inférieure de son fond (14), pour encliquetage sur le rail de support (10), au moins une patte de fixation (16, 16′) élastiquement déformable, caractérisée en ce qu'il est associé à ladite patte de fixation (16, 16′) un plot de blocage (20) monté mobile entre deux positions, à savoir une position escamotée d'attente, pour laquelle il laisse un libre jeu à cette patte de fixation (16, 16′), et une position déployée de service, pour laquelle, au contraire, il la contrebute à son dos.

2. Boîte suivant la revendication 1, caractérisée en ce que, la patte de fixation (16, 16′) comportant une saillie (17, 17′) pour coopérer en crochetage avec une nervure (13, 13′) du rail de support (10), le plot de blocage (20) intervient du côté opposé à cette saillie (17, 17′).

3. Boîte suivant l'une quelconque des revendications 1, 2, caractérisée en ce que son fond (14) présente une ouverture (22) en bordure de la patte de fixation (16, 16′) pour passage du plot de blocage (20).

4. Boîte suivant la revendication 3, caractérisée en ce que le plot de blocage (20) est d'un seul tenant avec la boîte, et s'étend à l'intérieur de celle-ci en position escamotée.

5. Boîte suivant la revendication 4, caractérisée en ce que le plot de blocage (20) est articulé au fond (14) par une zone charnière (23) de moindre épaisseur.

6. Boîte suivant l'une quelconque des revendications 3 à 5, caractérisée en ce que le plot de blocage (20) a en section transversale un profil en T, avec une platine (24), pour appui sur le fond (14), sur la surface supérieure de celui-ci, et un jambage (25), pour contrebutée de la patte de fixation (16, 16′).

7. Boîte suivant la revendication 6, caractérisée en ce que la platine (24) du plot de blocage (20) se prolonge par une languette de préhension (26).

8. Boîte suivant l'une quelconque des revendications 1 à 7, caractérisée en ce que le plot de blocage (20) comporte une saillie (27, 27′) le long de son bord libre pour porter sur la patte de fixation (16, 16′).

9. Boîte suivant l'une quelconque des revendications 1 à 8, caractérisée en ce que, au plot de blocage (20), sont associés des moyens d'encliquetage pour son verrouillage débrayable en position déployée.

10. Boîte suivant la revendication 9, caractérisée en ce que lesdits moyens d'encliquetage comportent au moins un cran (28), qui est prévu en saillie sur la surface interne de la boîte, à distance de son fond (14), et sous lequel s'engage le plot de blocage (20) lorsque celui-ci est en position déployée.

11. Boîte suivant l'une quelconque des revendications 1 à 10, caractérisée en ce que la patte de fixation (16) est jumelée avec une autre patte (16′) qui contrebute le plot de blocage (20) lorsque celui-ci est en position déployée.

12. Boîte suivant la revendication 11, caractérisée en ce que ladite autre patte (16′) est une patte de fixation qui, de même type que la patte de fixation (16), mais de hauteur différente, est parallèle à elle, et, en position déployée, le plot de blocage (20) contrebute indifféremment l'une et/ou l'autre de ces pattes de fixation (16, 16′).

13. Boîte suivant l'une quelconque des revendications 1 à 12, caractérisée en ce qu'elle comporte au moins deux pattes de fixation (16) à chacune desquelles il est associé un plot de blocage (20) distinct.

## Patentansprüche

1. Gehäuse zum Einrasten auf einer Tragschiene, insbesondere für eine elektrische Einrichtung, das auf der Unterseite seines Bodens (14) hervorspringend zum Einrasten auf der Tragschiene (10) mindestens eine elastisch verformbare Befestigungsklaue (16, 16′) umfaßt, dadurch gekennzeichnet, daß dieser Befestigungsklaue (16, 16′) ein Blockierklotz (20) zugeordnet ist, der beweglich zwischen zwei Stellungen montiert ist, und zwar einer eingefahrenen Wartestellung, in der er dieser Befestigungsklaue (16, 16′) ein freies Spiel läßt, und einer ausgefahrenen Betriebsstellung, in der er sie im Gegenteil an ihrem Rücken abstrebt.

2. Gehäuse nach Anspruch 1, dadurch gekennzeichnet, daß der Blockierklotz (20), wenn die Befestigungsklaue (16, 16′) einen Vorsprung (17, 17′) zum Zusammenwirken bezüglich Verhakung mit einer Rippe (13, 13′) der Tragschiene (10) aufweist, auf der diesem Vorsprung (17, 17′) entgegengesetzten Seite wirkt.

3. Gehäuse nach einem der Ansprüche 1, 2, dadurch gekennzeichnet, daß sein Boden (14) eine die Befestigungsklaue (16, 16′) säumende Öffnung (22) zum Durchgang des Blockierklotzes (20) aufweist.

4. Gehäuse nach Anspruch 3, dadurch gekennzeichnet, daß der Blockierklotz (20) mit dem Gehäuse aus einem Stück besteht und sich in eingefahrener Stellung in dessen Innerem erstreckt.

5. Gehäuse nach Anspruch 4, dadurch gekennzeichnet, daß der Blockierklotz (20) am Boden (14) durch eine Scharnierzone (23) geringerer Dicke angelenkt ist.

6. Gehäuse nach einem der Ansprüche 3 bis 5, dadurch gekennzeichnet, daß der Blockierklotz (20) im Querschnitt ein T-Profil mit einer Platine (24) zum Aufliegen auf den Boden (14) auf dessen oberer Seite und einem Ständer (25) zum Abstreben der Befestigungsklaue (16, 16′) hat.

7. Gehäuse nach Anspruch 6, dadurch gekennzeichnet, daß die Platine (24) des Blockierklotzes (20) durch einen Greiflappen (26) verlängert ist.

8. Gehäuse nach einem der Ansprüche 1 bis 7, dadurch gekennzeichnet, daß der Blockierklotz (20) längs seines freien Randes einen Vorsprung (27, 27′) zum Anlegen an der Befestigungsklaue (16, 16′) besitzt.

9. Gehäuse nach einem der Ansprüche 1 bis 8, dadurch gekennzeichnet, daß dem Blockierklotz (20) Einrastmittel für seine auskuppelbare Verriegelung in ausgefahrener Stellung zugeordnet sind.

10. Gehäuse nach Anspruch 9, dadurch gekennzeichnet, daß die Einrastmittel mindestens eine Raste (28) umfassen, die auf der Innenfläche des Gehäuses vorspringend in einem Abstand von seinem Boden (14) vorgesehen ist und unter die der Kontaktklotz (20) tritt, wenn dieser in ausgefahrener Stellung ist.

11. Gehäuse nach einem der Ansprüche 1 bis 10, dadurch gekennzeichnet, daß die Befestigungsklaue (16) mit einer anderen Klaue (16′) gepaart ist, die den Kontaktklotz (20) abstrebt, wenn dieser in ausgefahrener Stellung ist.

12. Gehäuse nach Anspruch 11, dadurch gekennzeichnet, daß die andere Klaue (16′) eine Befestigungsklaue ist, die vom selben Typ wie die Befestigungsklaue (16) ist, jedoch eine andere Höhe hat und zu dieser parallel ist, und der Kontaktklotz (20) in ausgefahrener Stellung ohne Unterschied die eine und/oder die andere dieser Befestigungsklauen (16, 16′) abstrebt.

13. Gehäuse nach einem der Ansprüche 1 bis 12, dadurch gekennzeichnet, daß es mindestens zwei Befestigungsklauen (16) umfaßt, deren jeder ein getrennter Blockierklotz (20) zugeordnet ist.

## Claims

1. A casing to be latched on to a support rail, in particular for electrical apparatus, of the kind comprising, in projecting relationship on the lower surface of its bottom (14), for latching on to the support rail (10), at least one elastically deformable fixing lug (16, 16′), characterised in that associated with said fixing lug (16, 16′) is a blocking stud member (20) which is mounted movably between two positions, namely a retracted waiting position in which it permits free movement for said fixing lug (16, 16′) and a deployed operating position in which in contrast it bears against it to support it at its back.

2. A casing according to claim 1 characterised in that, the fixing lug (16, 16′) comprising a projection (17, 17′) to co-operate in hooking engagement with a rib (13, 13′) of the support rail (10), the blocking stud member (20) is operative on the side opposite to said projection (17, 17′).

3. A casing according to either one of claims 1 and 2 characterised in that its bottom (14) has an opening (22) which borders the fixing lug (16, 16′) for the blocking stud member (20) to pass.

4. A casing according to claim 3 characterised in that the blocking stud member (20) is in one piece with the casing and extends in the interior thereof in the retracted position.

5. A casing according to claim 4 characterised in that the blocking stud member (20) is pivotally connected to the bottom (14) by a hinge zone (23) of reduced thickness.

6. A casing according to any one of claims 3 to 5 characterised in that the blocking stud member (20) is of a T-shaped profile in cross-section, with a plate portion (24) for bearing against the bottom (14) on the upper surface thereof, and a leg portion (25) for bearing against the fixing lug (16, 16′) for supporting same.

7. A casing according to claim 6 characterised in that the plate portion (24) of the blocking stud member (20) is prolonged by a gripping tongue portion (26).

8. A casing according to any one of claims 1 to 7 characterised in that the blocking stud member (20) comprises a projection (27, 27′) along its free edge to bear against the fixing lug (16, 16′).

9. A casing according to any one of claims 1 to 8 characterised in that associated with the blocking stud member (20) are latching means for releasably locking it in the deployed position.

10. A casing according to claim 9 characterised in that said latching means comprise at least one catch portion (28) which is provided in projecting relationship on the internal surface of the casing at a spacing from its bottom (14) and under which the blocking stud member (20) engages when it is in its deployed position.

11. A casing according to any one of claims 1 to 10 characterised in that the fixing lug (16) is twinned with another lug (16′) which bears against the blocking stud member (20) to support same when the blocking stud member is in the deployed position.

12. A casing according to claim 11 characterised in that said other lug (16′) is a fixing lug which, of the same type as the fixing lug (16) but of different height, is parallel thereto and, in the deployed position, the blocking stud member (20) bears against to support either one and/or the other of said fixing lugs (16, 16′).

13. A casing according to any one of claims 1 to 12 characterised in that it comprises at least two fixing lugs (16), with each of which is associated a separate blocking stud member (20).
